# EUROPÄISCHE PATENTSCHRIFT

(11) **EP 4 035 785 B1**
(45) Veröffentlichungstag und Bekanntmachung des Hinweises auf die Patenterteilung: **10.01.2024**
(21) Anmeldenummer: 21154597.5
(22) Anmeldetag: 01.02.2021
(51) Int. Cl.: B08B 3/02, B08B 5/02, B24C 3/12, B24C 3/26, B29C 64/236, B29C 64/241, B29C 64/379, B29C 64/35, B33Y 30/00, B33Y 40/20

(54) **VERFAHREN UND VORRICHTUNG ZUM BEHANDELN VON BAUTEILEN**
METHOD AND DEVICE FOR TREATING COMPONENTS
PROCÉDÉ ET DISPOSITIF DE TRAITEMENT DES COMPOSANTS

(43) Veröffentlichungstag der Anmeldung: 03.08.2022
(73) Patentinhaber: Rösler Holding GmbH, 96231 Bad Staffelstein (DE)
(72) Erfinder: Laux, Manuel, 96050 Bamberg (DE); Hiemann, Denise, 96247 Michelau (DE); Beck, Moritz, 96052 Bamberg (DE); Bätz, Christoph, 96450 Coburg (DE)
(74) Vertreter: Manitz Finsterwald Patent- und Rechtsanwaltspartnerschaft mbB

(56) Entgegenhaltungen:
- EP-A1- 3 718 692
- WO-A1-2016/144593
- CN-A- 102 548 712
- DE-A1- 2 728 960
- DE-A1-102004 055 144
- US-A- 1 833 301
- US-A1- 2004 012 112
- US-A1- 2017 370 016

## Beschreibung

Die vorliegende Erfindung betrifft ein Verfahren und eine Vorrichtung zum Entpacken von mittels 3D-Druck gedruckten Bauteilen aus dem Pulverbett. Derartige Verfahren und Vorrichtungen sind in verschiedenen Ausführungsvarianten bekannt und dienen dazu, mit additiven Fertigungsverfahren hergestellte Bauteile von pulverförmigen Resten zu entfernen (zu entpacken).

Beim Entpacken von Bauteilen soll einerseits ein wirtschaftlicher und effizienter Betrieb erreicht werden. Andererseits ist es erforderlich, dass die Bauteile schonend und gründlich von Pulverresten befreit werden, insbesondere wenn es sich um kleine, verwinkelte oder filigrane Bauteile handelt.

Aus der DE 27 28 960 A1 ist eine Vorrichtung nach dem Oberbegriff des Anspruchs 6 bekannt. In der US 1,833,301 A ist eine Gleitschleifeinrichtung mit einer von einem Band angetriebenen Trommel offenbart. Die DE 10 2004 055 144 A1 offenbart einen Muldenbandförderer.

Aus der EP 3 718 692 A1 sind ein Verfahren und eine Vorrichtung zum Entpacken von Bauteilen bekannt, wobei die Bauteile zunächst in einer Entpulverungskammer durch Vibrieren entpulvert werden. Anschließend gelangen die Bauteile über eine Transferrutsche in ein um seine Längsachse verschwenktes Muldenband, in dem die Teile mit Hilfe einer Strahleinrichtung nachbehandelt werden. Durch nochmaliges Verschwenken des Muldenbandes um seine Längsachse können die Teile anschließend aus dem Muldenband entfernt werden. Ein solches Verfahren bzw. eine solche Vorrichtung haben sich zwar im Stand der Technik bewährt. Bei bestimmten Anwendungen führt das bekannte Verfahren jedoch nicht immer zu vollständig befriedigenden Ergebnissen.

Es ist deshalb die Aufgabe der vorliegenden Erfindung, ein Verfahren und eine Vorrichtung zum Entpacken von Bauteilen zu schaffen, mit denen auf effiziente Weise ein Entpacken von insbesondere kleinen oder filigran geformten Bauteilen möglich ist.

Die Lösung dieser Aufgabe erfolgt durch die Merkmale der unabhängigen Ansprüche.

Bei dem erfindungsgemäßen Verfahren zum Entpacken von mittels 3D-Druck gedruckten Bauteilen aus dem Pulverbett werden die zu entpackenden Bauteile zunächst in ein mit Mitnehmern versehenes Muldenband eines Muldenbandförderers eingebracht, wobei sich das Muldenband in seiner Längsrichtung insbesondere horizontal zwischen einem Einlass und einem Auslass erstreckt. Die Bauteile werden dann in Längsrichtung von dem Einlass zu dem Auslass transportiert, indem das Muldenband in Umlaufrichtung bewegt wird. Erfindungsgemäß erfolgt also ein Transport der Bauteile vom Einlass des Muldenbandes zu dessen Auslass und zwar in Längsrichtung durch das Muldenband hindurch. Dies bringt den Vorteil mit sich, dass die Bauteile entlang der Längserstreckung des gesamten Muldenbandes von einem Fluidstrahl beaufschlagt werden können, wobei die Bauteile gleichzeitig während des Transports umgewälzt werden. Hierdurch häufen sich die Bauteile nicht an ein und derselben Stelle an sondern die Teile bleiben während des Transports im Wesentlichen vereinzelt und werden dennoch innerhalb des Muldenbandes umgewälzt und dadurch über eine längere Strecke allseitig vom dem Fluidstrahl beaufschlagt.

Da die Bauteile vom Einlass des Muldenbandes zum Auslass des Muldenbandes transportiert werden und das Muldenband deshalb (abgesehen von seinem Umlauf entlang einer vorgegebenen Bahn) nicht bewegt werden muss, eignen sich das erfindungsgemäße Verfahren und die entsprechende Vorrichtung besonders gut für einen kontinuierlichen Betrieb im Durchlaufverfahren, bei dem die Bauteile in einem kontinuierlichen Chargenstrom entpackt werden können.

Der Fluidstrahl wird in das Innere des Muldenbandförderers bzw. des Muldenbandes durch zumindest eine Düse eingebracht, die während der Beaufschlagung in Längsrichtung und/oder auch quer dazu hin und her bewegt wird. Bei dieser Verfahrensweise wird der Transport der Bauteile über die Länge des Muldenbandes vorteilhaft dazu verwendet, den Fluidstrahl während des Transports über längere Zeit auch über die Bauteile zu bewegen, so dass eine besonders intensive Strahlbehandlung erfolgen kann.

Außerdem kann der Abstand der Düse zum Boden des Muldenbandes während der Beaufschlagung verändert werden. Auf diese Weise lässt sich die Intensität des Fluidstrahls in Bezug auf die Bauteile variieren, so dass beispielsweise in Abhängigkeit von der Größe der Bauteile ein veränderter Abstand zwischen Düse und Boden des Muldenbandes eingestellt werden kann. Durch eine Bilderfassungsvorrichtung, die beispielsweise die Größe, Kontur oder Menge der zu entpackenden Bauteile automatisiert erfasst, kann anschließend der Abstand der Düse zum Boden des Muldenbandes oder aber auch die Hin- und Herbewegung der Düse in Abhängigkeit von den erfassten Bilddaten automatisiert gesteuert werden.

Vorteilhafte Ausführungsformen der Erfindung sind in der Beschreibung, der Zeichnung sowie den Unteransprüchen beschrieben.

Nach einer vorteilhafte Ausführungsform wird während der Beaufschlagung im Bereich des Auslasses und/oder im Bereich des Einlasses ein Luftvorhang quer zur Längsrichtung erzeugt, wobei dieser Luftstrom insbesondere ionisiert werden kann. Durch einen solchen Luftvorhang wird verhindert, dass Strahlmittel und/oder Pulver während der Beaufschlagung unerwünscht aus dem Einlass oder dem Auslass des Muldenbandes nach außen austritt.

Nach einer weiteren vorteilhaften Ausführungsform kann das umlaufende Muldenband während des Einbringens der Bauteile und während der Beaufschlagung in einer horizontalen Lage stationär gehalten werden. Mit anderen Worten läuft zwar das Muldenband zum Transport der Bauteile entlang seiner Umlaufbahn um. Das Muldenband wird jedoch weder verschwenkt noch gekippt sondern in einer Horizontallage, d.h. nicht zur Längsrichtung geneigt, stationär gehalten. Hierdurch wird sichergestellt, dass die Bauteile innerhalb des Muldenbandes gleichmäßig transportiert werden, ohne sich an bestimmten Stellen anzuhäufen oder aber ungewünscht übereinander zu fallen.

Nach einer weiteren vorteilhaften Ausführungsform kann der Fluidstrahl ein Strahlmittel enthalten, das nach der Beaufschlagung von Pulver getrennt und wieder erneut zur Beaufschlagung verwendet wird. Durch einen solchen Rückführungskreislauf kann ein effizienter Betrieb erzielt werden.

Nach einer weiteren vorteilhaften Ausführungsform kann der Muldenbandförderer in einem geschlossenen Transportkreislauf für den Transport und das Entpacken von Bauteilen verwendet werden. Hierdurch lässt sich ein sehr effizienter Durchlaufbetrieb erzielen, in dem einzelne oder mehrere Chargen kontinuierlich entpackt werden.

Nach einem weiteren Aspekt betrifft die vorliegende Erfindung eine Vorrichtung, nach Anspruch 6. Diese Vorrichtung umfasst einen Muldenbandförderer mit einem umlaufenden Muldenband, das sich in einer insbesondere horizontal verlaufenden Längsrichtung zwischen einem Einlass und einem Auslass erstreckt. Das Muldenband weist eine Transporteinrichtung auf, um Bauteile in Längsrichtung von dem Einlass zu dem Auslass durch den Muldenbandförderer zu transportieren und dabei umzuwälzen. Eine solche Transporteinrichtung kann beispielsweise in Form von einzelnen Mitnehmern verwirklicht sein, die an den Stäben des Muldenbandes beispielsweise wendelförmig angeordnet sind.

Nach einer vorteilhaften Ausführungsform kann die Vorrichtung am Einlass des Muldenbandes einen Eingabeschacht aufweisen, der gegenüber der Horizontalen in Richtung des Einlasses nach unten geneigt ist. Mit einem solchen Eingabeschacht wird verhindert, dass unerwünscht Pulver oder Strahlmittel während der Beaufschlagung aus dem Muldenband in Richtung des Einlasses austritt.

Nach einer weiteren vorteilhaften Ausführungsform kann am Auslass des Muldenbandes ein Ausgabeschacht vorgesehen sein, der mit Leitschaufeln versehen ist. Derartige Leitschaufeln dienen dazu, ein Ansammeln von Bauteilen im Bereich des Ausgabeschachts zu verhindern. So werden Bauteile, die sich am Ende des Muldenbandes nicht an dessen Boden sondern oberhalb des Bodens befinden, durch die Leitschaufeln in Richtung eines Ausgabeortes geleitet, ohne dass diese unmittelbar auf darunterliegende Bauteile fallen.

Nach einer weiteren vorteilhaften Ausführungsform kann die Umfangskontur des Ausgabeschachts an die Kontur des Auslasses des Muldenbandes angepasst sein. Auch dies sorgt dafür, dass die Bauteile sehr schonend aus dem Muldenbandförderer herausgefördert werden. So kann das Muldenband beispielsweise eine zumindest überwiegend kreisförmige Umfangskontur aufweisen und der Ausgabeschacht kann beispielsweise durch eine Rohrform an diese Umfangskontur angepasst sein.

Nach einer weiteren vorteilhaften Ausführungsform kann das Muldenband im Querschnitt gesehen symmetrisch zu einer Vertikalen ausgebildet sein, die durch eine Mittelachse der Bandmulde verläuft, wobei das umlaufende Muldenband in der Horizontalen stationär gehalten ist. Eine derartige symmetrische Ausbildung des Muldenbandes hat den Vorteil eines kompakten Aufbaus und einer gleichmäßigen Umwälzung der Bauteile.

Nach einer weiteren vorteilhaften Ausführungsform kann die gesamte Vorrichtung auf einem transportablen Grundgestell aufgebaut sein und eine maximale Höhe von 2095 mm und eine maximale Tiefe von 1555 mm aufweisen. Hierdurch ist eine sehr kompakte Vorrichtung geschaffen, die beispielsweise mit Hilfe eines Gabelstaplers oder einer Hubvorrichtung auf einfache Weise transportiert werden kann, wobei die geringen Abmessungen der Vorrichtung so gewählt sind, dass diese durch eine Standard-Doppeltüre transportiert werden kann.

Nachfolgend wird die vorliegende Erfindung rein beispielhaft anhand einer vorteilhaften Ausführungsform und unter Bezugnahme auf die beigefügten Zeichnungen beschrieben. Es zeigen:
- Fig. 1: eine geschnittene Seitenansicht einer Vorrichtung zum Entpacken von Bauteilen;
- Fig. 2: eine Querschnittsansicht durch die Vorrichtung von Fig. 1;
- Fig. 3: eine geschnittene perspektivische Ansicht der Vorrichtung von Fig. 1 und Fig. 2; und
- Fig. 4: eine weitere geschnittene perspektivische Ansicht der Vorrichtung von Fig. 1 bis Fig. 3.

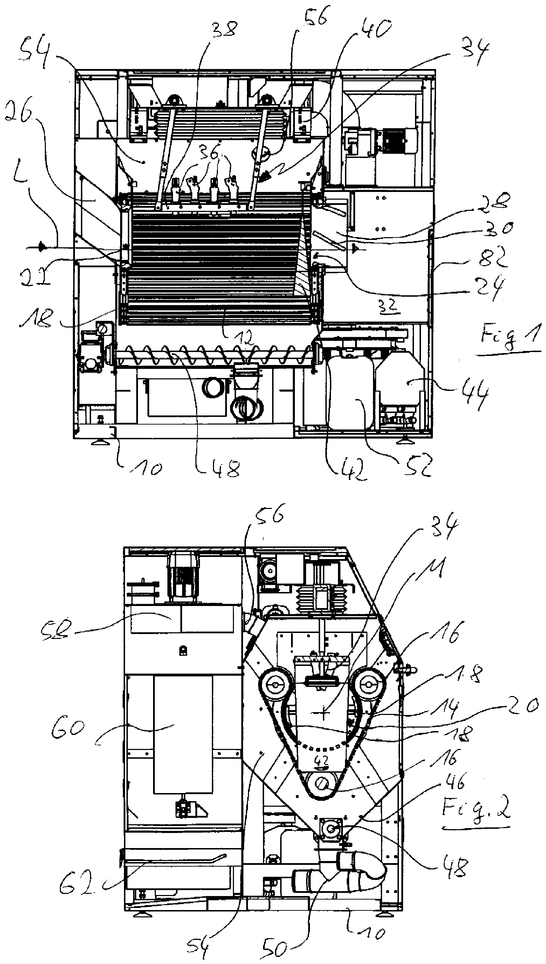

Fig. 1 zeigt eine Vorrichtung zum Entpacken von Bauteilen, die mittels 3D-Druck gedruckt sind, aus einem Pulverbett. Die Vorrichtung ist auf einem transportablen Grundgestell 10 aufgebaut und weist einen Muldenbandförderer 12 mit einem Muldenband 14 auf, das auf an sich bekannte Weise über mehrere Umlenkrollen 16 (Fig. 2) und Führungen 18 so geführt ist, dass durch das Muldenband 14 eine Bandmulde 20 (Fig. 2) gebildet ist. Hierzu umfasst das Muldenband eine Vielzahl von parallel miteinander verbundenen Stäben, an denen sich (nicht dargestellte) Mitnehmer befinden, die an den Außenseiten der Stäbe befestigt sind, so dass diese beim Umlauf des Muldenbandes ins Innere der Bandmulde 20 ragen. Das Muldenband 14 wird über einen nicht näher dargestellten Antrieb umlaufend angetrieben.

Wie insbesondere die Fig. 1 und Fig. 2 verdeutlichen, erstreckt sich das Muldenband 14 in Längsrichtung horizontal und stationär zwischen einem Einlass 22 und einem Auslass 24. Bei umlaufendem Muldenband werden Bauteile, die durch den Einlass 22 in das Innere der Bandmulde 20 gefördert worden sind, in Längsrichtung L durch den Muldenbandförderer 12 hindurchgefördert, so dass die Längsrichtung L gleichzeitig auch die Transportrichtung der Bauteile darstellt, in der diese von dem Einlass 22 zu dem Auslass 24 durch den Muldenbandförderer hindurch transportiert und dabei umgewälzt werden.

Am Einlass 22 des Muldenbandes 14 ist ein rohrförmiger Eingabeschacht 26 vorgesehen, dessen Umfangskontur an die kreisförmige Kontur des Muldenbandes 14 im Bereich der Bandmulde angepasst ist, wobei der Eingabeschacht 26 gegenüber der Horizontalen in Richtung des Einlasses 22 nach unten geneigt ist. Somit erstreckt sich der Eingabeschacht 26 von dem Einlass des Muldenbandes 14 entgegen der Transportrichtung L nach oben.

Am Auslass 24 des Muldenbandes 14 ist weiterhin ein Ausgabeschacht 28 vorgesehen, dessen Umfangskontur ebenfalls an die Kontur des Auslasses 24 des Muldenbandes 14 angepasst ist. Entsprechend besitzt der Ausgabeschacht 28 die Form eines Rohrstutzens, dessen Durchmesser dem Durchmesser der durch das Muldenband 14 gebildeten Bandmulde 20 entspricht. An seiner Innenwandung ist der Ausgabeschacht 28 mit mehreren Leitschaufeln 30 versehen, die etwa schraubenlinienförmig vom Auslass 28 ausgehend nach unten geneigt sind und die dafür sorgen, dass Bauteile, welche von dem Muldenbandförderer 12 etwas angehoben worden sind, nach Verlassen des Muldenbandes 14 nicht unmittelbar nach unten fallen, sondern geführt in Richtung eines Sammelraumes 32 gefördert werden.

Wie Fig. 2 verdeutlicht, ist die Kontur des umlaufenden Muldenbandes 14 im Querschnitt gesehen symmetrisch ausgebildet und zwar zu einer durch eine Mittelachse M der Bandmulde 20 verlaufenden vertikalen Ebene. Weiterhin kann das Muldenband 14 zwar umlaufen, ist jedoch insgesamt innerhalb des Grundgestells 10 stationär und in der Horizontalen fest gehalten.

Im Bereich der oberen Öffnung der durch das Muldenband 14 gebildeten Bandmulde ist eine Strahleinrichtung 34 vorgesehen, die mehrere Düsen 36 aufweist, die an einem Längsträger 38 befestigt sind. Der Längsträger 38 ist wiederum pendelnd aufgehängt und kann mit Hilfe eines nicht dargestellten Antriebs in und entgegen der Transportrichtung L (in Fig. 1 nach rechts und links) hin und her bewegt werden. Gleichzeitig kann der Längsträger 38 mit den daran befestigten Düsen 36 mit Hilfe einer Hubeinrichtung 40 auch in Richtung des Bodens des Muldenbandes 14 und entgegen dieser Richtung angehoben werden.

Schließlich können auch die Düsen 36 an dem Träger 38 einen separaten Antrieb aufweisen, um diese insbesondere quer zur Transportrichtung L hin und her zu bewegen.

Zur Steuerung der Bewegung der einzelnen Düsen oder auch des Trägers 38 in Längsrichtung L und/oder quer dazu in der Vertikalen ist eine Steuereinrichtung vorgesehen, die mit einer Bilderfassungsvorrichtung gekoppelt ist, welche das Innere der Bandmulde 20 erfasst. Mit Hilfe von Bilderkennungssoftware kann dann eine gezielte Bewegung der Düsen 36 erreicht werden, um die einzelnen Bauteile mit einem Fluidstrahl von Pulver zu befreien.

Sowohl im Bereich des Einlasses 22 wie auch im Bereich des Auslasses 24 ist jeweils ein Luftvorhang 42 vorgesehen, der sich im Wesentlichen über die gesamte Querschnittsfläche des Einlasses bzw. des Auslasses erstreckt, wobei der Luftvorhang ionisierte Luft verströmt, die als Sperre dient, um einen Austritt von Pulver und/oder Strahlmittel aus dem Bereich des Muldenbandförderers zu verhindern.

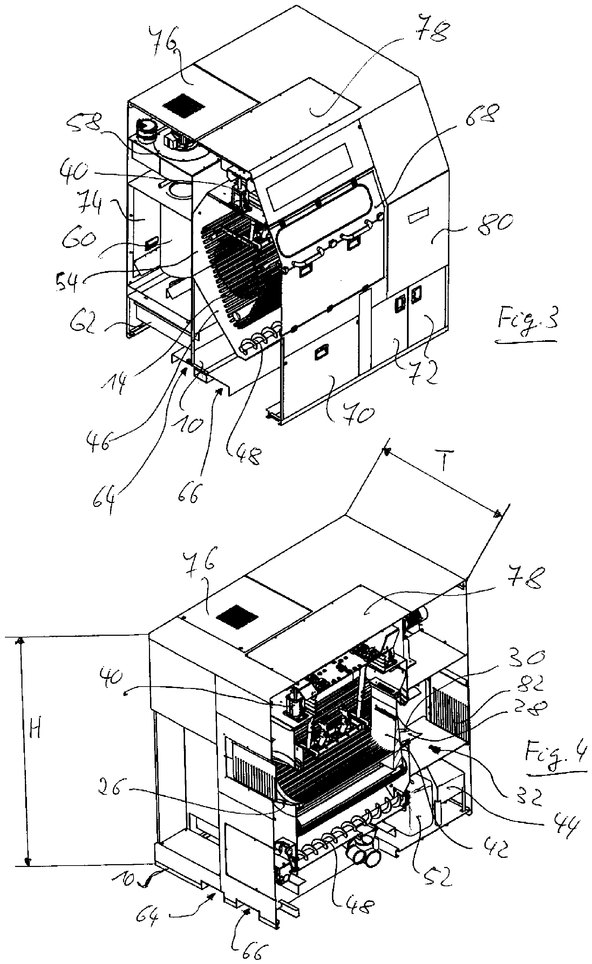

Der Fluidstrahl, mit dem die Bauteile innerhalb des Muldenbandförderers beaufschlagt werden, kann reine Druckluft umfassen. Es können jedoch auch andere bekannte Strahlmittel wie Glasperlen, Kunststoffkugeln, Maisschrot oder dergleichen eingesetzt werden. Ein solches Strahlmittel kann in einem Strahlmittelvorratsbehälter 44 (Fig. 4) bevorratet und von dort den Düsen 36 zugeführt werden. Um das Strahlmittel erneut für eine Beaufschlagung zu verwenden, wird dieses in einem Auffangtrichter 46 (Fig. 2 und 3) gesammelt, an dessen Boden eine Förderschnecke 48 vorgesehen ist, die das Strahlmittel in einen Rückführkanal 50 fördert, der wiederum mit einem (nicht dargestellten) Zyklon verbunden ist, um das Strahlmittel von Pulverresten zu reinigen. Nach dem Austritt aus dem Zyklon wird das Strahlmittel nochmals durch ein Vibrationssieb hindurchgeführt, wobei in diesem Bereich auch eine Strahlmittelnachdosierung mit Strahlmittel aus dem Strahlmittelbehälter 44 erfolgen kann. Das Bezugszeichen 52 in Fig. 1 bezeichnet einen Behälter für abgesonderte Pulverreste.

Im Inneren der Strahlkabine 54, in der sich der Muldenbandförderer 12 befindet, ist eine Luftabsaugung 56 vorgesehen, mit der Pulverstaub aus der Strahlkammer 54 abgesaugt und mit Hilfe eines Lüfters 58 einem Filter 60 zugeführt wird. Der Filterinhalt kann in regelmäßigen Abständen einem Restpulverbehälter 62 zugeführt werden.

Wie insbesondere die Fig. 3 und Fig. 4 verdeutlichen, ist die vorstehend beschriebene Vorrichtung äußerst kompakt aufgebaut und weist eine maximale Höhe H von 2095 mm und eine maximale Tiefe T von 1555 mm auf. Die auf dem Grundgestell 10 aufgebaute Vorrichtung kann mit Hilfe eines Gabelstaplers oder Hubwagens auf einfache Weise transportiert werden, dessen Gabeln in zwei an der Unterseite vorgesehene Aufnahmeöffnungen 64 und 66 eingeführt werden können. Die Vorrichtung ist mit einem allseitig geschlossenen Gehäuse versehen, das an der Vorderseite mit einer Zugangsklappe 68 versehen ist, um von außen an die Düsen 36 zu gelangen. Unterhalb der Zugangsklappe 68 ist eine weitere Klappe 70 vorgesehen, um einen Zugang zur Strahlmittelrückförderung und zu einer Siebschublade zu gewähren. Die Türen 72 ermöglichen einen Zugang zu dem Restpulverbehälter 52 und dem Strahlmittelvorratsbehälter 44.

An der Rückseite der Vorrichtung ist eine weitere Zugangsklappe 74 (Fig. 3) vorgesehen, die einen Zugang zu dem Filter 60 eröffnet. Ebenso ist an der Rückseite eine Zugangstüre vorgesehen, die einen Zugang zur vorhandenen Pneumatik und den Strahlschläuchen gewährt und die einen Siebwechsel ermöglicht.

Ein Deckel 76 an der Oberseite des Gehäuses ermöglicht einen Zugang zu dem Lüfter 58. Ein weiterer Deckel 78 an der Oberseite des Gehäuses ermöglicht eine Reparatur und Wartung der Düsenhubeinheit.

Schließlich sind im Bereich des Ausgabetrichters 28 zwei weitere Öffnungen zur Werkstückentnahme vorgesehen. An der Vorderseite des Gehäuses ist eine Schwenkklappe 80 vorgesehen, durch welche die entpackten Bauteile manuell von vorne entnommen werden können. An der benachbarten Seitenwand des Gehäuses ist ebenfalls eine Auslassöffnung 82 vorgesehen, durch welche die Werkstücke automatisch seitlich abgefördert werden können. Auf diese Weise kann die Vorrichtung in einem geschlossenen Transportkreislauf für einen Transport und das Entpacken von Bauteilen verwendet werden.

Im Betrieb der vorstehend beschriebenen Vorrichtung werden die zu entpackenden Bauteile zunächst manuell oder automatisch über den Eingabeschacht 26 zum Einlass 22 des Muldenbandförderers 12 transportiert, dessen Muldenband 14 umlaufend angetrieben wird. Hierdurch werden die in das Innere das Bandmulde geförderten Bauteile in Längsrichtung L durch das Muldenband transportiert und zwar von dem Einlass 22 zu dem Auslass 24, wobei die Teile während des Transports zwar umgewälzt werden, sich jedoch nicht anhäufen. Gleichzeitig werden die Bauteile während des Transports von Fluidstrahlen mit Strahlmittel beaufschlagt, die aus den Düsen 36 austreten. Hierbei werden die Bauteile entpackt und nach Durchlaufen der Bandmulde 20 durch den Auslass 24 über den Ausgabeschacht 28 aus dem Bereich des Bandförderers 12 entfernt. Die Luftvorhänge im Bereich des Einlasses und des Auslasses verhindern dabei ein Austreten von Pulverstaub. Die Düsen 36 können sowohl in wie auch entgegen der Transportrichtung L und auch quer zu dieser bewegt oder auch rotiert werden. Auch ist eine Bewegung der Düsen 36 in vertikaler Richtung möglich. Somit kann eine optimierte Beaufschlagung der Bauteile mit Strahlmittel erfolgen.

Das Strahlmittel selbst wird im Kreislauf über die Förderschnecke 48 rückgeführt, gereinigt und dem Kreislauf erneut zugeführt.

## Patentansprüche

1. Verfahren zum Entpacken von mittels 3D-Druck gedruckten Bauteilen aus dem Pulverbett, umfassend die folgenden Schritte:
Einbringen der zu entpackenden Bauteile in ein mit Mitnehmern versehenes Muldenband (14) eines Muldenbandförderers (12), das sich in seiner Längsrichtung (L) zwischen einem Einlass (22) und einem Auslass (24) erstreckt,
Transportieren der Bauteile in Längsrichtung (L) durch das Muldenband (14) von dem Einlass (22) zu dem Auslass (24) durch Bewegen des Muldenbandes in Umlaufrichtung, und
Umwälzen der Bauteile innerhalb des Muldenbandes (14) während des Transports, wobei
die Bauteile während des Transports von zumindest einem Fluidstrahl beaufschlagt werden,
der Fluidstrahl in das Innere des Muldenbandförderers (12) durch zumindest eine Düse (36) eingebracht wird, die während der Beaufschlagung in Längsrichtung (L) und/oder quer dazu hin und her bewegt wird, oder deren Abstand zum Boden des Muldenbandes (14) während der Beaufschlagung verändert wird, und wobei
eine Bewegung der Düse (36) von einer Steuereinrichtung gesteuert wird , die mit einer Bilderfassungsvorrichtung gekoppelt ist.

2. Verfahren nach Anspruch 1,
**dadurch gekennzeichnet,**
**dass** während der Beaufschlagung im Bereich des Auslasses (24) und/oder im Bereich des Einlasses (22) ein Luftvorhang quer zur Längsrichtung (L) erzeugt wird, wobei der für den Luftvorhang (42) verwendete Luftstrom insbesondere ionisiert wird.

3. Verfahren nach einem der vorstehenden Ansprüche,
**dadurch gekennzeichnet,**
**dass** das umlaufende Muldenband (14) während des Einbringens der Bauteile und während der Beaufschlagung in einer horizontalen Lage stationär gehalten wird.

4. Verfahren nach einem der vorstehenden Ansprüche,
**dadurch gekennzeichnet,**
**dass** der Fluidstrahl ein Strahlmittel enthält, das nach der Beaufschlagung von Pulver getrennt und wieder erneut zur Beaufschlagung verwendet wird.

5. Verfahren nach einem der vorstehenden Ansprüche,
**dadurch gekennzeichnet,**
**dass** der Muldenbandförderer (12) in einem geschlossenen Transportkreislauf für den Transport und das Entpacken von Bauteilen verwendet wird.

6. Vorrichtung, insbesondere zur Durchführung eines Verfahrens nach zumindest einem der vorstehenden Ansprüche, umfassend
einen Muldenbandförderer (12) mit einem umlaufenden Muldenband (14), das sich in einer Längsrichtung (L) zwischen einem Einlass (22) und einem Auslass (24) erstreckt,
wobei das Muldenband (14) eine Transporteinrichtung (T) aufweist, um Bauteile in Längsrichtung von dem Einlass (22) zu dem Auslass (24) durch den Muldenbandförderer zu transportieren und dabei umzuwälzen, und eine Strahleinrichtung (34) mit zumindest einer Düse (36) zur Beaufschlagung der Bauteile während des Transports mit zumindest einem Fluidstrahl, **dadurch gekennzeichnet, dass**
die zumindest eine Düse (36) in Längsrichtung (L) und/oder quer dazu hin und her bewegbar ist, und/oder dass deren Abstand zum Boden des Muldenbandes (14) während der Beaufschlagung veränderbar ist, und
dass eine mit einer Bilderfassungsvorrichtung gekoppelte Steuerung vorgesehen ist, die ausgebildet ist, eine Bewegung der Düse (36) zu steuern.

7. Vorrichtung nach Anspruch 6,
**dadurch gekennzeichnet, dass**
am Einlass (22) des Muldenbandes (14) ein Eingabeschacht (26) vorgesehen ist, der gegenüber der Horizontalen in Richtung des Einlasses (22) nach unten geneigt ist.

8. Vorrichtung nach Anspruch 6 oder 7,
**dadurch gekennzeichnet, dass**
am Auslass (24) des Muldenbandes (14) ein Ausgabeschacht (28) vorgesehen ist, der mit Leitschaufeln (30) versehen ist.

9. Vorrichtung nach Anspruch 8,
**dadurch gekennzeichnet, dass**
die Umfangskontur des Ausgabeschachtes (28) an die Kontur des Auslasses (24) des Muldenbandes (14) angepasst ist.

10. Vorrichtung nach zumindest einem der Ansprüche 6 - 8,
**dadurch gekennzeichnet, dass**
das umlaufende Muldenband (14) im Querschnitt gesehen symmetrisch zu einer durch eine Mittelachse (M) der Bandmulde verlaufenden Vertikalen ausgebildet und in der Horizontalen stationär gehalten ist.

11. Vorrichtung nach zumindest einem der Ansprüche 6 - 10,
**dadurch gekennzeichnet, dass**
diese auf einem transportablen Grundgestell (10) aufgebaut ist und eine maximale Höhe von 2095 mm und eine maximale Tiefe von 1555 mm aufweist.

## Claims

1. A method for unpacking parts printed by means of 3D printing from the powder bed, said method comprising the following steps:
inserting the parts to be unpacked into a trough belt (14) of a trough belt conveyor (12) which is provided with entrainers and which extends in its longitudinal direction (L) between an inlet (22) and an outlet (24);
transporting the parts in the longitudinal direction (L) through the trough belt (14) from the inlet (22) to the outlet (24) by moving the trough belt in a direction of revolution; and
circulating the parts within the trough belt (14) during the transport, wherein the parts are acted on by at least one fluid jet during the transport,
the fluid jet is introduced into the interior of the trough belt conveyor (12) through at least one nozzle (36) which is moved to and fro in the longitudinal direction (L) and/or transversely thereto during the action or whose spacing from the base of the trough belt (14) is varied during the action, and wherein
a movement of the nozzle (36) is controlled by a control device which is coupled to an image capture apparatus.

2. A method according to claim 1,
**characterized in that**,
during the action, an air curtain is produced transversely to the longitudinal direction (L) in the region of the outlet (24) and/or in the region of the inlet (22), with the air flow used for the air curtain (42) in particular being ionized.

3. A method according to one of the preceding claims,
**characterized in that**
the revolving trough belt (14) is held in a stationary manner in a horizontal position during the insertion of the parts and during the action.

4. A method according to any one of the preceding claims,
**characterized in that**
the fluid jet includes a blasting medium which is separated from powder after the action and which is used again for the action.

5. A method according to any one of the preceding claims,
**characterized in that**
the trough belt conveyor (12) is used in a closed transport circuit for the transport and the unpacking of parts.

6. An apparatus, in particular for carrying out a method according to at least one of the preceding claims, comprising a trough belt conveyor (12) having a revolving trough belt (14) which extends in a longitudinal direction (L) between an inlet (22) and an outlet (24),
wherein the trough belt (14) has a transport device (T) to transport parts in the longitudinal direction from the inlet (22) to the outlet (24) through the trough belt conveyor and to circulate them in so doing, and
a blasting device (34) comprising at least one nozzle (36) for applying at least one fluid jet to the parts during the transport,
**characterized in that**
the at least one nozzle (36) is movable to and fro in the longitudinal direction (L) and/or transversely thereto and/or **in that** its spacing from the base of the trough belt (14) is variable during the action, and
**in that** a control device coupled to an image capture apparatus is provided which is configured to control a movement of the nozzle (36).

7. An apparatus according to claim 6,
**characterized in that**
an input chute (26), which is inclined downwardly with respect to the horizontal in the direction of the inlet (22), is provided at the inlet (22) of the trough belt (14).

8. An apparatus according to claim 6 or 7,
**characterized in that**
a discharge chute (28), which is provided with guide vanes (30), is provided at the outlet (24) of the trough belt (14).

9. An apparatus according to claim 8,
**characterized in that**
the peripheral contour of the discharge chute (28) is adapted to the contour of the outlet (24) of the trough belt (14).

10. An apparatus according to at least one of the claims 6-8,
**characterized in that**
the revolving trough belt (14), viewed in cross-section, is formed symmetrically with respect to a vertical extending through a central axis (M) of the belt trough and is held in a stationary manner in the horizontal.

11. An apparatus according to at least one of the claims 6-10,
**characterized in that**
it is assembled on a transportable base frame (10) and has a maximum height of 2095 mm and a maximum depth of 1555 mm.

## Revendications

1. Procédé pour déballer des pièces, imprimées par impression 3D, du lit de poudre, comprenant les étapes suivantes consistant à :
introduire les pièces à déballer dans une bande en auge (14) d'un convoyeur à bande en auge (12), qui est munie d'entraîneurs et qui s'étend dans sa direction longitudinale (L) entre une entrée (22) et une sortie (24), transporter les pièces dans la direction longitudinale (L) à travers la bande en auge (14) de l'entrée (22) à la sortie (24) par déplacement de la bande en auge dans la direction de rotation, et
faire tourner les pièces à l'intérieur de la bande en auge (14) pendant le transport,
dans lequel
les pièces sont sollicitées par au moins un jet de fluide pendant le transport, le jet de fluide est introduit à l'intérieur du convoyeur à bande en auge (12) par au moins une buse (36) qui est déplacée en va-et-vient dans la direction longitudinale (L) et/ou transversalement à celle-ci pendant la sollicitation ou dont la distance par rapport au fond de la bande en auge (14) est modifiée pendant la sollicitation, et
le déplacement de la buse (36) est commandé par un dispositif de commande qui est couplé à un dispositif d'acquisition d'images.

2. Procédé selon la revendication 1,
**caractérisé en ce que**
pendant la sollicitation, un rideau d'air est généré transversalement à la direction longitudinale (L) dans la zone de la sortie (24) et/ou dans la zone de l'entrée (22), le flux d'air utilisé pour le rideau d'air (42) étant en particulier ionisé.

3. Procédé selon l'une des revendications précédentes,
**caractérisé en ce que**
la bande en auge (14) tournante est maintenue stationnaire dans une position horizontale pendant l'introduction des pièces et pendant la sollicitation.

4. Procédé selon l'une des revendications précédentes,
**caractérisé en ce que**
le jet de fluide contient un agent de projection qui, après la sollicitation, est séparé de la poudre et est réutilisé pour la sollicitation.

5. Procédé selon l'une des revendications précédentes,
**caractérisé en ce que**
le convoyeur à bande en auge (12) est utilisé dans un circuit de transport fermé pour le transport et le déballage de pièces.

6. Dispositif, en particulier pour la mise en oeuvre d'un procédé selon l'une au moins des revendications précédentes, comprenant
un convoyeur à bande en auge (12) ayant une bande en auge (14) tournante qui s'étend dans une direction longitudinale (L) entre une entrée (22) et une sortie (24),
la bande en auge (14) comprenant un dispositif de transport (T) pour transporter des pièces dans la direction longitudinale de l'entrée (22) à la sortie (24) à travers le convoyeur à bande en auge et pour les faire tourner, et un dispositif de projection (34) ayant au moins une buse (36) pour, pendant le transport, solliciter les pièces par au moins un jet de fluide,
**caractérisé en ce que**
ladite au moins une buse (36) est mobile en va-et-vient dans la direction longitudinale (L) et/ou transversalement à celle-ci, et/ou
**en ce que** sa distance par rapport au fond de la bande en auge (14) peut être modifiée pendant la sollicitation, et
**en ce qu'**il est prévu une commande couplée à un dispositif d'acquisition d'images, qui est conçue pour commander un déplacement de la buse (36).

7. Dispositif selon la revendication 6,
**caractérisé en ce que**
à l'entrée (22) de la bande en auge (14), il est prévu une goulotte d'alimentation (26) qui est inclinée vers le bas par rapport à l'horizontale en direction de l'entrée (22).

8. Dispositif selon la revendication 6 ou 7,
**caractérisé en ce que**
à la sortie (24) de la bande en auge (14), il est prévu une goulotte de distribution (28) qui est munie d'aubes directrices (30).

9. Dispositif selon la revendication 8,
**caractérisé en ce que**
le contour périphérique de la goulotte de distribution (28) est adapté au contour de la sortie (24) de la bande en auge (14).

10. Dispositif selon l'une au moins des revendications 6 à 8,
**caractérisé en ce que**
la bande en auge (14) tournante, vue en coupe transversale, est réalisée à symétrie par rapport à une verticale passant par un axe central (M) de l'auge de la bande et est maintenue stationnaire à l'horizontale.

11. Dispositif selon l'une au moins des revendications 6 à 10,
**caractérisé en ce que**
celui-ci est monté sur un châssis de base transportable (10) et présente une hauteur maximale de 2095 mm et une profondeur maximale de 1555 mm.
